# EUROPEAN PATENT APPLICATION

(11) **EP 4 124 919 A1**
(43) Date of publication of application: **01.02.2023**
(21) Application number: 22184839.3
(22) Date of filing: 14.07.2022
(51) Int. Cl.: G05B 19/4065

(54) **DIAGNOSTIC APPARATUS, DIAGNOSTIC METHOD, AND CARRIER MEDIUM**

(30) Priority: 29.07.2021 JP 2021124583; 27.05.2022 JP 2022087116
(71) Applicant: Ricoh Company, Ltd., Tokyo 143-8555 (JP)
(72) Inventor: AIBA, Akihito, Tokyo, 143-8555 (JP); TAKAMI, Junichi, Tokyo, 143-8555 (JP); NODA, Yuichi, Tokyo, 143-8555 (JP); HAGIWARA, Satoshi, Tokyo, 143-8555 (JP)
(74) Representative: SSM Sandmair

(57) **Abstract**

A diagnostic apparatus (100) includes a process number determination unit (104) configured to determine a process number based on operation information that changes in accordance with an operation of a machine being a subject of diagnosis, and a state determination unit (107) configured to determine a state of the machine using corresponding one of a plurality of model parameters corresponding to the determined process number and state information that changes in accordance with the state of the machine. The process number indicates an order of a particular process in a plurality of processes executed by the machine.

## Description

### BACKGROUND

### Technical Field

Embodiments of the present disclosure relate to a diagnostic apparatus, a diagnostic method, and a carrier medium.

### Related Art

There are methods for predicting and determining (or presuming) an abnormality of a tool and machining quality in machining on a workpiece using a machine tool or the like. For example, information on a current value of a motor of a machine and a physical quantity such as vibration, sound, or force is detected and used in such prediction and determination (for example, Japanese Unexamined Patent Application Publication No. 2017-033346).

In addition, in the related art, for the purpose of facilitating abnormality detection for each processing step of multi-step machining, there is a technique of receiving a user designation on a detection parameter used for each processing step of the machining and performing abnormality detection by automatically switching the designated detection parameter.

In the related art, information (a designated detection parameter or the like) indicating which of a plurality of processes is currently being executed is acquired. However, depending on the machine tool, it is difficult to directly acquire such information used for switching the detection parameter according to the designation by the user for each processing step, which is a disadvantage.

### SUMMARY

In view of the above circumstances, an object of the present disclosure is to enable abnormality detection even in a case where information of a process currently executed by a machine being a subject of diagnosis is not directly acquired.

In one aspect, a diagnostic apparatus includes a process number determination unit and a state determination unit. The process number determination unit determines a process number based on operation information that changes in accordance with an operation of a machine being a subject of diagnosis. The process number indicates an order of a particular process in a plurality of processes executed by the machine. The state determination unit determines a state of the machine using corresponding one of a plurality of model parameters corresponding to the determined process number and state information that changes in accordance with the state of the machine.

In another aspect, a diagnostic method includes determining a process number based on operation information that changes in accordance with an operation of a machine being a subject of diagnosis, and determining a state of the machine using corresponding one of a plurality of model parameters corresponding to the determined process number and state information that changes in accordance with the state of the machine. The process number indicates an order of a particular process in a plurality of processes executed by the machine.

In another aspect, a carrier medium carries computer readable codes for controlling a computer system to carry out the method described above.

According to one or more embodiments, the currently executed process is determined from operation information that changes in accordance with operation of the machine being the subject of diagnosis, and abnormality is detected even in a case where the processing step currently executed by the machine is not directly acquired.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a block diagram illustrating an example of a configuration of a diagnostic system according to a first embodiment of the present disclosure;
FIG. 2 is a block diagram illustrating an example of a hardware configuration of a machine (a machine tool) according to the first embodiment;
FIG. 3 is a block diagram illustrating an example of a hardware configuration of a diagnostic apparatus according to the first embodiment;
FIG. 4 is a block diagram illustrating an example of functional configurations of the diagnostic apparatus and the machine according to the first embodiment;
FIG. 5 is a flowchart illustrating a procedure of process number determination performed by a process number determination unit according to the first embodiment;
FIG. 6 is a diagram illustrating an example of a graphical user interface (GUI) screen;
FIG. 7 is a block diagram illustrating an example of a functional configuration of a diagnostic apparatus according to a second embodiment;
FIG. 8 is a flowchart illustrating a procedure of process number determination performed by a process number determination unit according to the first embodiment;
FIG. 9 is a block diagram illustrating an example of a functional configuration of a diagnostic apparatus according to a third embodiment;
FIG. 10 is a diagram illustrating an example of calculation of average power representing an intensity of a sensor signal;
FIG. 11 is a diagram illustrating an example of calculation of spectral centroid with respect to an average spectrum;
FIG. 12 is a diagram illustrating an example of calculation of a frequency component with respect to the average spectrum;
FIG. 13 is a diagram illustrating another example of calculation of the frequency component with respect to the average spectrum;
FIG. 14 is a diagram illustrating an example of calculation of a cluster number with respect to the average spectrum;
FIG. 15 is a diagram illustrating an example in which the average spectrum is represented in time series;
FIG. 16 is a flowchart illustrating a procedure for generating operation time-series information performed by an operation time-series generation unit according to the third embodiment; and
FIG. 17 is a diagram illustrating an example of a GUI screen.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Descriptions are given below in detail of a diagnostic apparatus, a diagnostic method, and a carrier medium for the diagnostic method. The present disclosure, however, is not limited to the following one or more embodiments, and the elements of the following one or more embodiments include elements that may be easily conceived by those skilled in the art, those being substantially the same ones, and those being within equivalent ranges. Furthermore, various omissions, substitutions, changes, and combinations of the constituent elements may be made without departing from the gist of the following one or more embodiments.

A description is given of a first embodiment of the present disclosure.

### Overview of Configuration of Diagnostic System

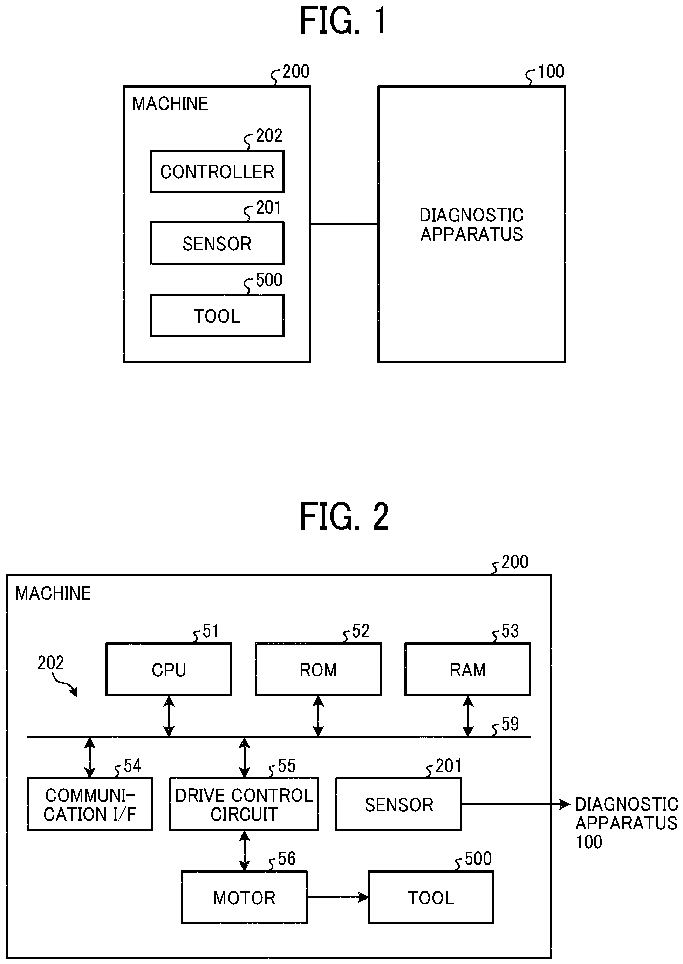

FIG. 1 is a block diagram illustrating an example of a configuration of a diagnostic system according to a first embodiment of the present disclosure. A description is given below of the overview of a diagnostic system 1 according to the present embodiment with reference to FIG. 1.

As illustrated in FIG. 1, the diagnostic system 1 according to the present embodiment includes a diagnostic apparatus 100 and a machine 200 (a machine tool). The machine 200 is connected to the diagnostic apparatus 100 to communicate with each other. Although one machine 200 is connected to the diagnostic apparatus 100 in the example in FIG. 1, the configuration is not limited thereto, and a plurality of machine 200 may be connected to the diagnostic apparatus 100 so as to be able to communicate with each other.

The diagnostic apparatus 100 is an apparatus that is connected to the machine 200 to communicate with each other and monitors the state of the operation of the machine 200.

The machine 200 is a machine tool that uses a tool 500 to perform machining such as cutting, grinding, or polishing on an object (workpiece) to be machined. The machine 200 is an example of a machine to be monitored by the diagnostic apparatus 100. The subject of monitoring is not limited to a machine tool and may be any machine to be monitored, such as assembling machine, a measuring machine, an inspection machine, or a cleaning machine. Hereinafter, the machine 200 will be described as an example of the subject of monitoring.

The machine 200 includes a tool 500, a sensor 201 installed in the machine 200, and a controller 202 that controls the machine 200.

The tool 500 is a drill, an end mill, a cutting tool tip, a grindstone, or the like. The tool 500 performs various types of machining on a workpiece described later.

The sensor 201 detects a physical quantity and outputs the detected physical quantity information as a detection result (sensor data) to the diagnostic apparatus 100. The physical quantity detected is vibration, sound, or the like generated when the tool installed in the machine 200 contacts the workpiece to be machined during the processing, or vibration, sound, or the like generated by the tool 500 or the machine 200 itself. The sensor 201 is, for example, a microphone, a vibration sensor, an accelerometer, or an acoustic emission (AE) sensor and is installed adjacent to the tool 500 or adjacent to a motor of the machine 200, so as to detect the vibration, the sound, or the like. The sensor 201 outputs waveform data as measurement data to the diagnostic apparatus 100.

The controller 202 outputs to the diagnostic apparatus 100, as operation information of the machine 200, information such as a spindle rotation speed, a feed speed, a spindle coordinate value, and a current value of the spindle at the time of machining. The controller 202 further outputs, to the diagnostic apparatus 100, a type of the tool 500, a tool manufacturer of the tool 500, and a diameter of the tool 500 when the user has inputted such information.

The machine 200 and the diagnostic apparatus 100 may be connected in any connection form. For example, the machine 200 and the diagnostic apparatus 100 may be connected by a dedicated connection line, a wired network such as a wired local area network (LAN), a wireless network, or the like.

Note that any number of sensors 201 may be used. The plurality of sensors 201 may be of the same type to detect the same physical quantity, or of different types to detect different physical quantities.

The sensor 201 and the controller 202 may be incorporated in advance in the machine 200 or may be attached to the machine 200 being a finished product.

### Hardware Configuration of Machine

FIG. 2 is a block diagram illustrating an example of a hardware configuration of the machine 200 (machine tool). A description is given below of the hardware configuration of the machine 200 according to the present embodiment with reference to FIG. 2.

As illustrated in FIG. 2, the controller 202 of the machine 200 includes a central processing unit (CPU) 51, a read only memory (ROM) 52, a random access memory (RAM) 53, a communication interface (I/F) 54, a drive control circuit 55, and a motor 56, which are connected to one another via a bus 59.

The sensor 201 is connected to the diagnostic apparatus 100 to communicate with each other.

The CPU 51 is a processor that controls the entire operation of the machine 200. The CPU 51 executes a program stored in the ROM 52 or the like using, for example, the RAM 53 as a work area, to control the entire operation of the machine 200 and implement machining functions.

The communication I/F 54 is an interface for communicating with external devices such as the diagnostic apparatus 100. The drive control circuit 55 is a circuit that controls the drive of the motor 56. The motor 56 drives the tool 500 used in machining. Examples of the tool 500 includes a drill, an end mill, a cutting tool tip, a grindstone, and a table that supports an object to be machined and moves corresponding to the machining. The sensor 201 is as described above.

### Hardware Configuration of Diagnostic Apparatus

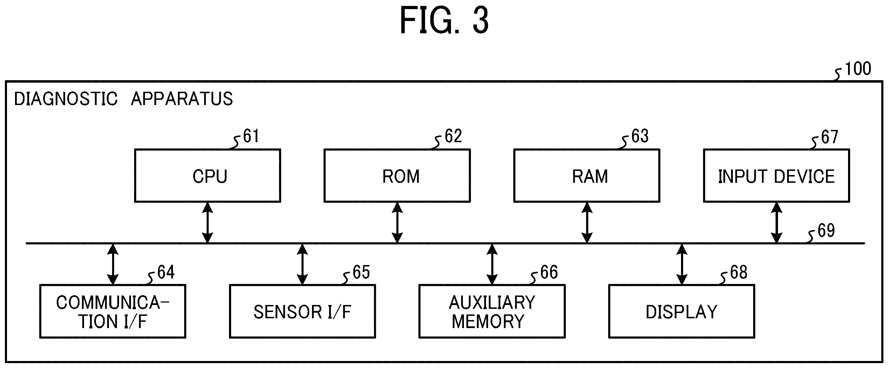

FIG. 3 is a block diagram illustrating an example of the hardware configuration of the diagnostic apparatus 100. A description is given below of the hardware configuration of the diagnostic apparatus 100 according to the present embodiment with reference to FIG. 3.

As illustrated in FIG. 3, the diagnostic apparatus 100 includes a CPU 61, a ROM 62, a RAM 63, a communication I/F 64, a sensor I/F 65, an auxiliary memory 66, an input device 67, and a display 68, which are connected via a bus 69 to communicate with each other.

The CPU 61 is a processor that controls the entire operation of the diagnostic apparatus 100. The CPU 61 executes a program stored in the ROM 62 or the like using, for example, the RAM 63 as a work area, to control the entire operation of the diagnostic apparatus 100 and implement various diagnostic functions.

The communication I/F 64 is an interface for communication with an external apparatus such as the machine 200. The communication I/F 64 is, for example, a network interface card (NIC) in compliance with transmission control protocol/internet protocol (TCP/IP).

The sensor I/F 65 is an interface for receiving a detection result from the sensor 201 installed in the machine 200.

The auxiliary memory 66 is a non-volatile memory such as a hard disk drive (HDD), a solid state drive (SSD), or an electrically erasable programmable read-only memory (EEPROM). The auxiliary memory 66 stores various data such as setting information of the diagnostic apparatus 100, detection results and context information received from the machine 200, an operating system (OS), and an application program.

The auxiliary memory 66 is a memory of the diagnostic apparatus 100 but is not limited thereto. For example, the auxiliary memory 66 may be a storage device outside the diagnostic apparatus 100 or a storage device included in a server capable of data communication with the diagnostic apparatus 100.

The input device 67 is, for example, a mouse or keyboard for inputting characters and numbers, selecting an instruction, and moving a cursor.

The display 68 is, for example, a cathode ray tube (CRT) display, a liquid crystal display (LCD), or an organic electro luminescence (EL) display that displays characters, numbers, various screens, operation icons, and the like.

Note that the hardware configuration illustrated in FIG. 3 is one example. Some of the components illustrated can be omitted, or one or more different devices may be provided. For example, in a case where the diagnostic apparatus 100 is dedicated to diagnosis of the machine 200 and transmits a diagnostic result to an external server or the like, the input device 67 and the display 68 may be dispensed with.

A description is given of functional configurations and operations of the diagnostic apparatus 100 and the machine 200.

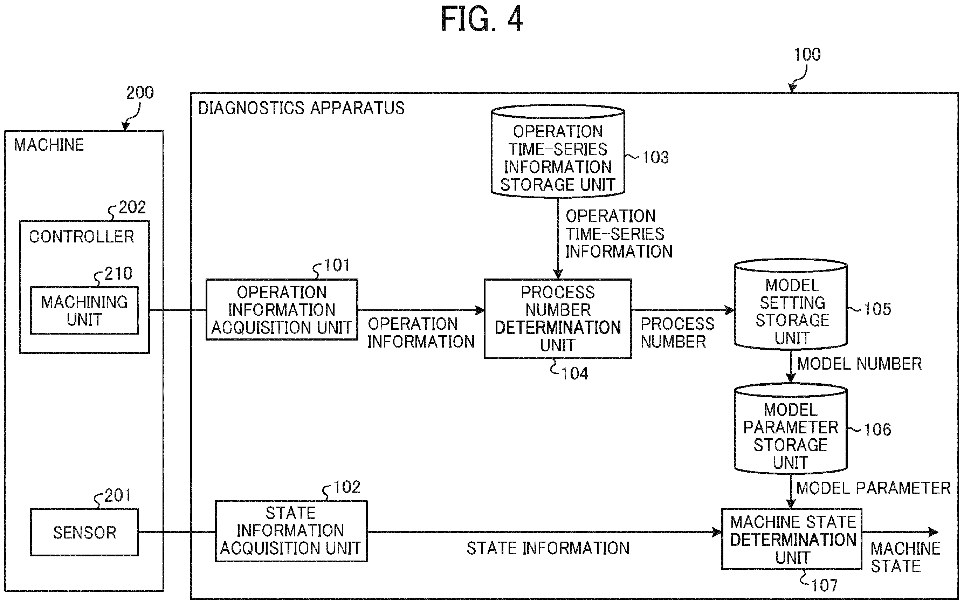

FIG. 4 is a block diagram illustrating an example of the functional configurations of the diagnostic apparatus 100 and the machine 200. Descriptions are given below of the functional configurations and operations of the diagnostic apparatus 100 and the machine 200 according to the present embodiment, with reference to FIG. 4.

As illustrated in FIG. 4, the machine 200 to be diagnosed by the diagnostic apparatus 100 includes a machining unit 210. The machining unit 210 is a functional unit that controls the motor 56 to control the driving of the tool 500. The machining unit 210 may be implemented by the CPU 51 (in FIG. 2) executing a program, that is, by software. Alternatively, the machining unit 210 may be implemented by hardware such as an integrated circuit (IC) or may be implemented by a combination of software and hardware.

The machining unit 210 of the machine 200 divides an operation of driving the tool 500 by a unit of one process. The machining unit 210 of the machine 200 switches a plurality of processes so as to repeat a predetermined sequence of processes defined, for example, by a machining program. The machining unit 210 of the machine 200 outputs data (cutting feed signal or the like) indicating an operation section (machining section) during which a predetermined action relating to a process is executed.

As illustrated in FIG. 4, the diagnostic apparatus 100 includes an operation information acquisition unit 101, a state information acquisition unit 102, an operation time-series information storage unit 103(an operation time-series information storage area), a process number determination unit 104, a model setting storage unit 105 (a model setting storage area), a model parameter storage unit 106 (a model parameter storage area), and a machine state determination unit 107. The operation information acquisition unit 101, the state information acquisition unit 102, the process number determination unit 104, and the machine state determination unit 107 illustrated in FIG. 4 may be implemented by the CPU 61 illustrated in FIG. 3 executing a program, that is, by software. Alternatively, these functional units may be implemented by hardware such as an (IC), or a combination of software and hardware. The operation time-series information storage unit 103, the model setting storage unit 105, and the model parameter storage unit 106 may be implemented by the auxiliary memory 66.

The operation information acquisition unit 101 acquires, from the machine 200 to be diagnosed, operation information relating to the operation of the machine 200.

The operation information includes, for example, data (cutting feed signal or the like) indicating an operation section (machining section) of a predetermined operation of the machine 200 determined by the machining program. For example, the predetermined operation is defined by a machining program. The operation section (machining section) is a section in which, for example, a tool is actually operated in a process. This signal indicates a predetermined value only when the tool 500 is performing machining and indicates 0 otherwise. As a result, the process number is determined with a high accuracy.

Further, the operation information includes, for example, data indicating a start time of repetitive operation of the machine 200. Specifically, the operation information is a signal indicating the start or the end of execution of a machining program, program identification (ID) information of a program being executed, or the like. As a result, the process number is determined with a high accuracy.

Further, the operation information includes, for example, a vibration sensor signal representing a vibration of the machine 200 acquired by the sensor 201. As a result, the process number is determined with a high accuracy.

The operation information includes, for example, a microphone device signal representing a sound generated by the machine 200, acquired with the sensor 201. As a result, the process number is determined with a high accuracy.

The state information acquisition unit 102 acquires information (state information) relating to the state of the machine 200 from the machine 200. The state information in this disclosure is, for example, a signal from the sensor 201 attached to the machine 200. More specifically, the state information is a signal acquired from a vibration sensor, a microphone, or the like.

The operation time-series information storage unit 103 stores information (operation time-series information) relating to the order of operation of the machine 200. Specifically, the operation time-series information is, for example, information indicating a correspondence between a process number indicating the order of a particular process in a plurality of processes executed by the machine 200 and a feature of the process, indicated by the operation information. Further, the operation time-series information indicates, for example, a correspondence between a process number and a tool number indicating the tool 500 used in the process. Table 1 below presents an example of the operation time-series information in a case where the length of the machining section in the process is a feature indicated by the operation information.

**Table 1**

| Process number | Machining section length (ms) |
|---|---|
| 1 | 500 |
| 2 | 2000 |
| ... | ... |
| 10 | [1200] |

When the operation time-series information is known in advance, the diagnostic apparatus 100 may receive, from a user, input of the operation time-series information in advance. For example, actual operation information may be acquired from the machine 200 being operating, the acquired actual operation information may be converted to generate the operation time-series information. The operation time-series information thus generated is stored. An example of this will be described later.

The process number determination unit 104 refers to the operation information acquired by the operation information acquisition unit 101 and the operation time-series information stored in the operation time-series information storage unit 103 and determines the process number of the process being executed by the machine 200.

For example, when the signal indicating the machining section is acquired as the operation information and the machining section length of each process is stored as the operation time-series information, the process number determination unit 104 calculates the length of the current machining section from the signal indicating the machining section and outputs, as the determination result, the process number that matches most the machining section length, of process numbers stored in the operation time-series information. In this way, even when the process number is not directly acquired from the machine 200, the diagnostic apparatus 100 determines the process number and uses the determined the process number in diagnosis.

The model setting storage unit 105 stores a correspondence (model setting) between a model number and a process number. The model number is an identification number of each of a plurality of model parameters used for state determination of the machine 200, and a process number.

An example of the model setting is presented in Table 2 below.

**Table 2**

| Process number | Model number |
|---|---|
| 1 | 2 |
| 2 | 10 |
| ... | ... |
| 10 | 5 |

The model number and the process number may be input in advance by the user.

The model parameter storage unit 106 stores, for each of the plurality of model parameters used for determining the state of the machine 200, a correspondence (model setting) between the model parameter and the model number that is the identification number of the model parameter. For example, when the state information is a vibration sensor signal, the model parameter is, for example, a statistical value such as an average value or a standard deviation value of the signal power, a parameter that represents frequency characteristics using a probability and statistical model such as a Gaussian mixture model (GMM), a parameter of a neural network that performs class classification from an input signal, a threshold for classifying the machine state from various calculated values, or a window length for performing short-time Fourier transform (STFT) of a signal. Table 3 below presents an example of model setting when the signal power average value is used as a model parameter.

**Table 3**

| Model number | Model parameter (Average) |
|---|---|
| 1 | 1.0 |
| 2 | 0.2 |
| ... | ... |
| 10 | 3.0 |

The model number and the parameter may be input in advance by the user. Alternatively, actual operation information and state information may be acquired from the machine 200 being operating, the acquired actual operation information and state information may be converted. An appropriate model number and an appropriate parameter may be generated and stored from the data thus generated.

The machine state determination unit 107 determines the state of the machine 200 using the state information acquired by the state information acquisition unit 102 and the model parameter stored in the model parameter storage unit 106. For example, when the state information is the signal of the sensor 201 (vibration sensor) and the model parameter is the average value of the signal power in the normal state, the machine state determination unit 107 calculates the average value of the power of the vibration sensor signal and calculates the difference from the model parameter. Then, the machine state determination unit 107 outputs the difference as an abnormality score (machine state). Alternatively, the machine state determination unit 107 outputs a value or a character string indicating an abnormal state when the difference exceeds a threshold value, or indicating a normal state when the difference is within the threshold value.

With the above-described configuration, the diagnostic apparatus 100 stores desired model settings in the model setting storage unit 105 so as to designates the model parameter to be applied to a particular one of a plurality of processes and determines the process number so as to apply the model parameter according to the designation.

When a plurality of machining programs is registered in the machine 200, the operation time-series information and the model setting are stored for each program ID. Then, the process number determination unit 104 determines a combination of the program ID and the process number and reads from the model setting storage unit 105 the model number corresponding to the combination. The process number determination unit 104 may determine the process number based on the program ID and read the model number corresponding to the process number presumed from Table 2 from the model setting storage unit 105. The above-described processing may be executed for each unit time or may be executed at the end of some event such as a machining section.

Next, the process number determination processing by the process number determination unit 104 will be described.

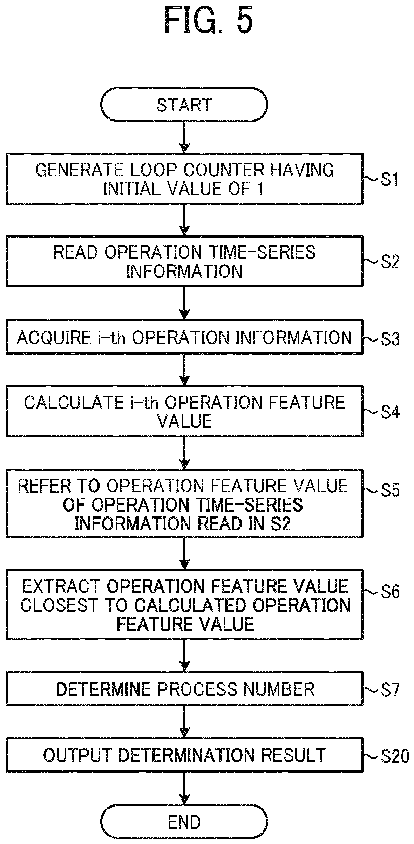

FIG. 5 is a flowchart illustrating a procedure of process number determination performed by the process number determination unit 104. As illustrated in FIG. 5, the process number determination unit 104 first generates a loop counter "i" having an initial value of 1 (step S1).

Next, the process number determination unit 104 reads the operation time-series information from the operation time-series information storage unit 103 (step S2). In addition, the process number determination unit 104 acquires i-th operation information of the machine 200 via the operation information acquisition unit 101 (step S3).

Next, the process number determination unit 104 calculates an i-th operation feature value (machining section length or the like) based on the acquired i-th operation information (step S4).

Next, the process number determination unit 104 refer to the operation feature value (the machining section length) of the operation time-series information read in S2 (step S5). In step S6, the process number determination unit 104 extracts, from the operation time-series information (Table 1), operation feature value (machining section length) closest to the operation feature value (machining section length) calculated in step S4.

Next, the process number determination unit 104 determines, in the operation time-series information, a process number corresponding to the extracted operation feature value as the current process number (step S7).

In addition, after determining the process number, the process number determination unit 104 outputs the determination result, that is, notifies the user of the determination result (step S20). In the present embodiment, the process number determination unit 104 displays a graphical user interface (GUI) screen to notify the user of the determination result.

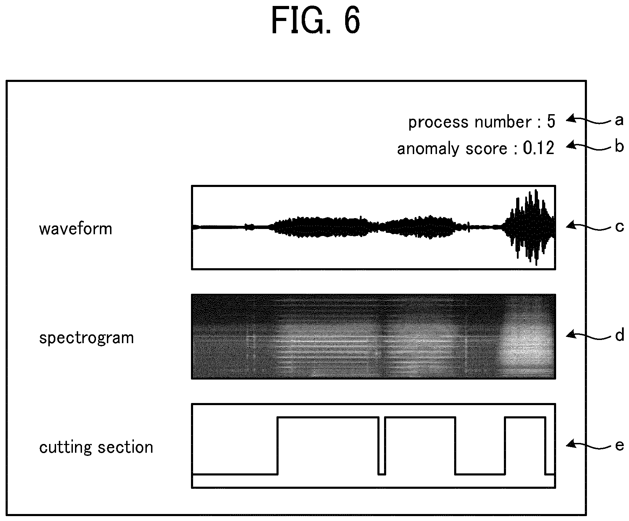

FIG. 6 is a diagram illustrating an example of the GUI screen. The GUI illustrated in FIG. 6 includes display of a vibration waveform c (state information), a vibration spectrogram d (conversion of state information), and a machining section e (operation information) in association with a process number a determined by the process number determination unit 104 and an abnormality score b (machine state) output by the machine state determination unit 107. The vibration waveform (state information) c indicates waveform data detected by the sensor 201. The vibration spectrogram (conversion of state information) d indicates the vibration power of the vibration waveform (state information) c for each frequency. The machining section (operation information) e is data indicating a section during which the machine 200 performs a predetermined operation.

The contents displayed on the GUI screen illustrated in FIG. 6 are updated in real time.

As described above, according to the present embodiment, since the currently performed process is determined from the operation information of the machine to be diagnosed, abnormality detection is performed even when the information of the process performed in the machine to be diagnosed is not directly acquired.

A description is given of a second embodiment of the present disclosure.

The second embodiment is different from the first embodiment in that the process number is more accurately determined from information of a longer time. In the following description of the second embodiment, descriptions of the same parts as those in the first embodiment are omitted, and differences from the first embodiment are described.

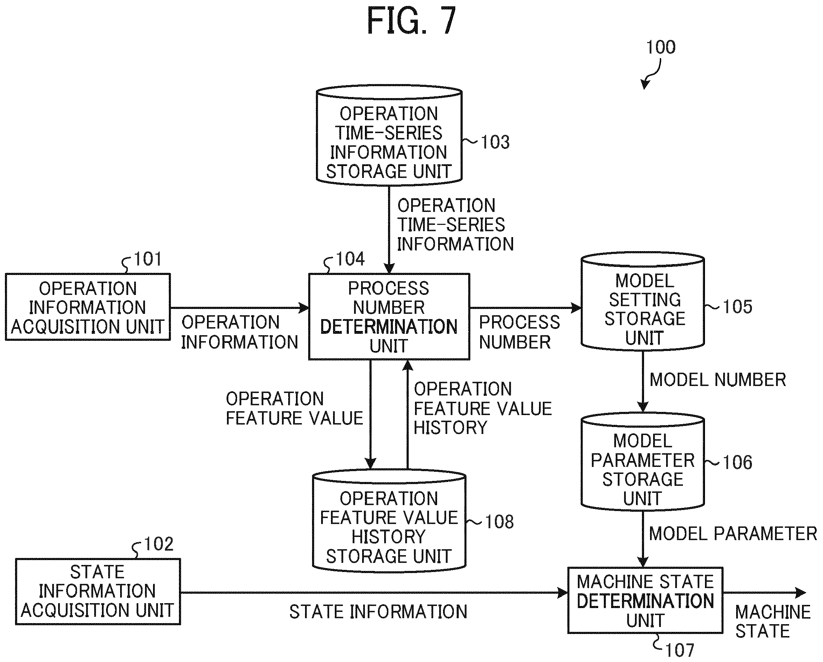

FIG. 7 is a block diagram illustrating an example of a functional configuration of the diagnostic apparatus 100 according to the second embodiment. As illustrated in FIG. 7, the diagnostic apparatus 100 includes an operation feature value history storage unit 108 (an operation feature value history storage area) in addition to the operation information acquisition unit 101, the state information acquisition unit 102, the operation time-series information storage unit 103, the process number determination unit 104, the model setting storage unit 105, the model parameter storage unit 106, and the machine state determination unit 107 described in the first embodiment. The operation feature value history storage unit 108 illustrated in FIG. 7 may be implemented by the auxiliary memory 66.

As described in the first embodiment, the process number determination unit 104 determines the process number of the process currently executed by the machine 200 with reference to the operation information acquired by the operation information acquisition unit 101 and the operation time-series information stored in the operation time-series information storage unit 103. However, the process number determination unit 104 is unable to determine the process number depending on a combination of the content of the operation time-series information stored in the operation time-series information storage unit 103 and the content of the operation information acquired by the operation information acquisition unit 101.

For example, when the operation time-series information storage unit 103 stores the operation time-series information in which the operation feature value indicates the machining section length as presented in Table 4, and the machining section length calculated from the acquired operation information is 500 milliseconds, it is difficult for the process number determination unit 104 to determine whether the process number is "1" or "4."

**Table 4**

| Process number | Machining section length (ms) |
|---|---|
| 1 | 500 |
| 2 | 2000 |
| 3 | [1000] |
| 4 | 500 |
| 5 | [1000] |

Therefore, in the present embodiment, when the process number determination unit 104 fails to determine the process number as described above, the process number determination unit 104 stores the current operation feature value in the operation feature value history storage unit 108. Then, the process number determination unit 104 compares the operation feature value calculated from the subsequent operation information acquired by the operation information acquisition unit 101 and the operation feature value history stored in the operation feature value history storage unit 108 with the operation time-series information stored in the operation time-series information storage unit 103 and determines the process number, referring to the operation time-series information in Table 4.

For example, in the above-described case, the process number determination unit 104 temporarily stores the information of the machining section length of 500 milliseconds in the operation feature value history storage unit 108, and then determines the process number referring to the temporarily stored information and the machining section length calculated from the subsequent operation information acquired by the operation information acquisition unit 101. Then, when the machining section length calculated next is the 1000 milliseconds, the process number determination unit 104 determines that the process number is "5" with reference to Table 4 and the machining section length of 500 milliseconds that has been temporarily stored.

While the process number determination unit 104 is not able to determine the process number, the process number determination unit 104 may output a value (for example, "0") indicating that determination of the process number is not available.

In response to input of the value indicating that determination of the process number is not available, the model setting storage unit 105 may output a value (for example, "0") indicating that the model number is uncertain in the same manner, or may output a corresponding model number by handling the value in the same manner as other process numbers.

When the model number is uncertain, the model parameter storage unit 106 outputs a value indicating that the model is uncertain instead of the model parameter.

When the model is uncertain, the machine state determination unit 107 may output a preset value (for example, an abnormality score such as "0" or a character string such as "state uncertain") to indicate the state of the machine 200.

In addition, when the operation information acquisition unit 101 has acquired, as the operation information, the signal indicating start or end of execution of the program, the process number determination unit 104 determines that the operation information is at the head or the end of the operation time-series information. With this determination, even if the process number remains uncertain for a long time, a minimum operational guarantee is secured.

After determining the process number once, the process number determination unit 104 may increment the process number and output the incremented process number for each section without performing the matching process with the operation time-series information. In this case, when determining that a cycle of processes has been completed based on the signal indicating start or end of execution of the program, the process number determination unit 104 resets the process number to the head.

Next, a description is given of a procedure of accurately determining the process number using the feature value history of longer time information, performed by the process number determination unit 104.

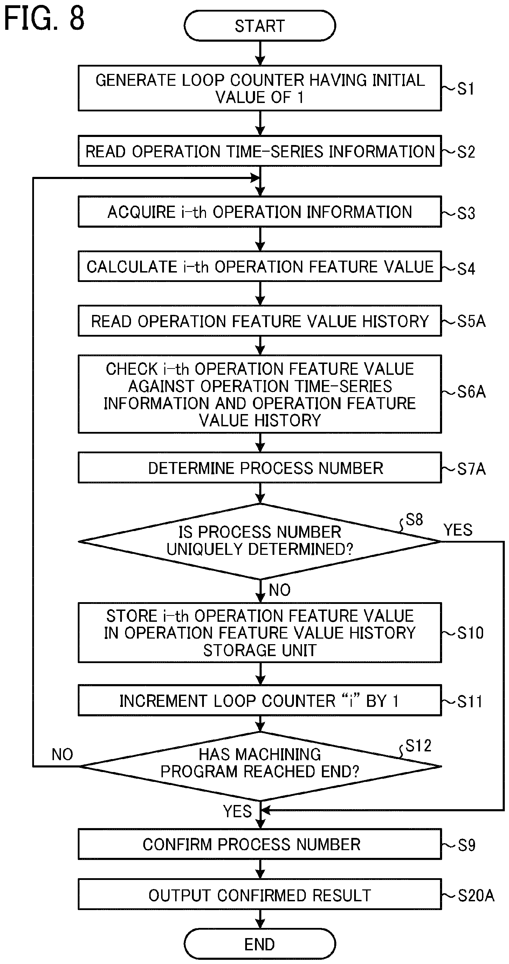

FIG. 8 is a flowchart illustrating the procedure of process number determination performed by the process number determination unit 104. As illustrated in FIG. 8, the process number determination unit 104 first generates a loop counter "i" having an initial value of 1 (step S1).

Next, the process number determination unit 104 reads the operation time-series information from the operation time-series information storage unit 103 (step S2). In addition, the process number determination unit 104 acquires i-th operation information of the machine 200 via the operation information acquisition unit 101 (step S3).

Next, the process number determination unit 104 calculates an i-th operation feature value (machining section length or the like) based on the acquired i-th operation information (step S4).

Next, the process number determination unit 104 reads the operation feature value history from the operation feature value history storage unit 108 (step S5A). Then, the process number determination unit 104 checks the i-th operation feature value (machining section length or the like) against the operation time-series information and the operation feature value history (step S6A).

Next, the process number determination unit 104 determines a process number from the check result (step S7A).

When the process number is uniquely determined (Yes in step S8), the process number determination unit 104 confirms the process number (step S9).

In addition, after determining the process number, the process number determination unit 104 notifies the user of the determination result (step S30). In the present embodiment, the process number determination unit 104 displays the GUI screen illustrated in FIG. 6 to notify the user of the confirmed result.

On the other hand, when the process number is not uniquely determined (No in step S8), the process number determination unit 104 stores the current operation feature value in the operation feature value history storage unit 108 (step S10).

Next, the process number determination unit 104 increments the loop counter "i" by 1 (step S11) and determines whether the machining program has reached the end (step S12).

When determining that the machining program has not yet reached the end (No in step S12), the process number determination unit 104 proceeds to step S3 and acquires the i-th operation information of the machine 200 via the operation information acquisition unit 101.

On the other hand, when determining that the machining program has reached the end (Yes in step S12), the process number determination unit 104 proceeds to step S9 and confirms the process number.

As described above, in this embodiment, when the process number is not uniquely determined, the diagnostic apparatus 100 stores the operation feature value converted from the current operation information in the operation feature value history storage unit 108. Then, the diagnostic apparatus 100 determines the process number from the subsequent operation information, the operation time-series information stored in the operation time-series information storage unit 103, and the operation feature value history stored in the operation feature value history storage unit 108. Such a configuration using features of a longer period (the operation feature value history) provides an effect of more accurately determining a process.

A description is given of a third embodiment.

The third embodiment is different from the first and second embodiments in that operation time-series information is automatically generated. In the description of the third embodiment, descriptions of the same parts as those in the first and second embodiments are omitted, and differences from the first or second embodiment are described.

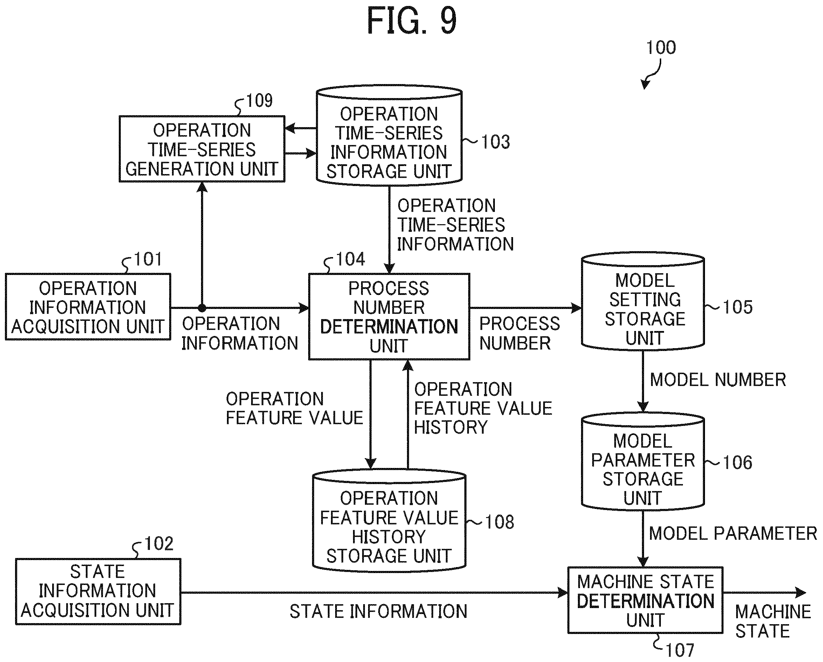

FIG. 9 is a block diagram illustrating an example of a functional configuration of the diagnostic apparatus 100 according to the third embodiment. As illustrated in FIG. 9, the diagnostic apparatus 100 includes an operation time-series generation unit 109 in addition to the operation information acquisition unit 101, the state information acquisition unit 102, the operation time-series information storage unit 103, the process number determination unit 104, the model setting storage unit 105, the model parameter storage unit 106, the machine state determination unit 107, and the operation feature value history storage unit 108 described in the second embodiment. The operation time-series generation unit 109 illustrated in FIG. 9 may be implemented by the CPU 61 (in FIG. 3) executing a program, that is, by software. Alternatively, the operation time-series generation unit 109 may be implemented by hardware such as an IC or may be implemented by a combination of software and hardware.

The operation time-series generation unit 109 automatically generates operation time-series information from the operation information acquired by the operation information acquisition unit 101. Specifically, the operation time-series generation unit 109 uses the following information acquired by the operation information acquisition unit 101.

Cutting feed signal: a binary signal which is ON during a cutting feed operation in the machine 200 and OFF in other cases; and

Sensor signal: a signal obtained from the sensor 201 such as a vibration sensor or a microphone.

Furthermore, the following information also is used when acquired from the machine 200. Note that alternative means in the case where the following information is not available will be described below.

Program ID: ID information indicating a type of a machining program being executed by the machine 200; and

### Program start signal: a trigger signal indicating the head of the machining program

The operation time-series generation unit 109 generates operation time-series information for a series of machining operations from the head to the end of the machining program. The operation time-series generation unit 109 extracts, as a period from the head to the end of the machining program, a period from when the program start signal is initially received after the start of the operation time-series generation processing to when the program start signal is again received as the machining program makes one round. Accordingly, even in a process during continuous operation, an operation by an operator for specifying the period is unnecessary.

However, when the diagnostic apparatus 100 does not have a mechanism for acquiring the program start signal from the machine 200, the operation time-series generation unit 109 receives explicit indication of the start and the end of the machining program by some method from the operator. For example, a start button and a stop button for instructing the start and the end of generation of the operation time-series information are provided on the GUI displayed on the display 68 of the diagnostic apparatus 100 of the diagnostic system 1.

It is conceivable to provide a mechanism for, for example, starting the operation from the head of the machining program after the start button is pressed and pressing the stop button when the program reaches the end, or to apply an operational rule that the operator executes the machining program from the head to the end only once during execution of the operation time-series generation processing.

Roughly speaking, the operation time-series generation unit 109 executes the following actions (1) to (6), to generate the operation time-series information.
(1) The operation time-series generation unit 109 acquires an ID of a program being executed via the operation information acquisition unit 101. When there is no mechanism for acquiring the program ID from the machine 200, a mechanism for receiving explicit indication of the program ID is included in the GUI displayed on the display 68 of the diagnostic apparatus 100 of the diagnostic system 1.
(2) Next, when the operation time-series information corresponding to the acquired program ID already exists in the operation time-series information storage unit 103, the operation time-series generation unit 109 skips the subsequent actions. When the operation time-series information corresponding to the acquired program ID does not exist in the operation time-series information storage unit 103, the operation time-series generation unit 109 generates an empty table corresponding to that program ID.
(3) Next, the operation time-series generation unit 109 prepares a counter that counts the number of the cutting feed signals from the program start time point, adds a row to the table generated in the action (2) each time the counter value increases, and records the counter value in the column of "process number."
(4) Next, the operation time-series generation unit 109 obtains the length (cutting feed section length) of a period in which the cutting feed signal is ON by the process number and records the time length in the column of "cutting feed section length" corresponding to that process number.
(5) In addition, the operation time-series generation unit 109 may record a parameter representing the feature of the signal pattern of the entire cutting feed section, calculated from the sensor signal in the cutting feed section, in the column of "feature value" corresponding to that process number. Any parameter obtained by signal processing on the sensor signal may be used. However, in consideration of the calculation cost in the process number determination unit 104, it is preferable to use a simple index capable of simply expressing the feature of the sensor signal as a scalar value or a relatively low-dimensional vector. Examples of such an index are as follows.

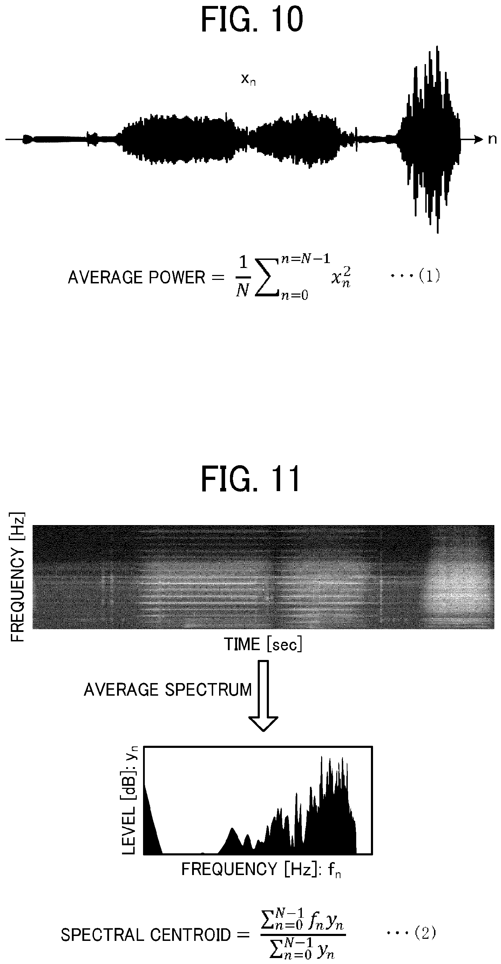

The index may be an average power representing the intensity of the sensor signal. FIG. 10 is a diagram illustrating a calculation example of the average power indicating the intensity of the sensor signal. In FIG. 10, the reference sign N represents the number of sample points in the cutting feed section. The reference sign n represents an index of the sample point, and n=0, 1, ... N-1. The reference sign Xₙ represents the value of the sensor signal at a sample point n. As illustrated in FIG. 10, based on the sensor signal obtained from the sensor 201, an average power representing the intensity of the sensor signal is calculated by Equation (1).

Examples of the index include a spectral centroid with respect to an average spectrum obtained by fast Fourier transform (FFT) or the like. FIG. 11 is a diagram illustrating an example of calculation of the spectral centroid with respect to the average spectrum. In FIG. 11, the reference sign n represents an index of frequency, and n=0, 1, ... N-1. The reference signs fₙ and yₙ represent the value of frequency and the value of level corresponding to the index n of frequency, respectively. As illustrated in FIG. 11, the spectral centroid is calculated by Equation (2) based on the average spectrum obtained by FFT or the like.

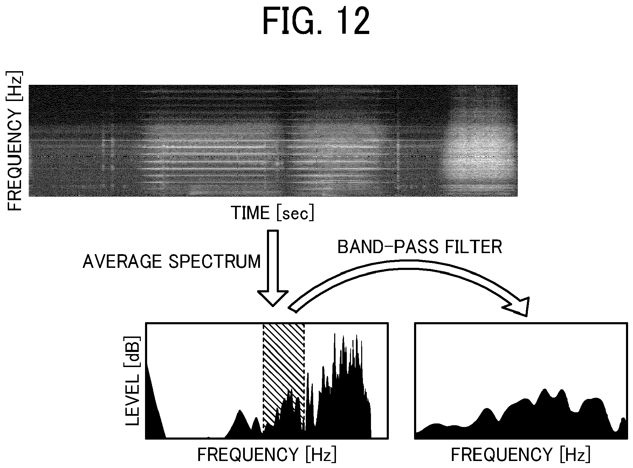

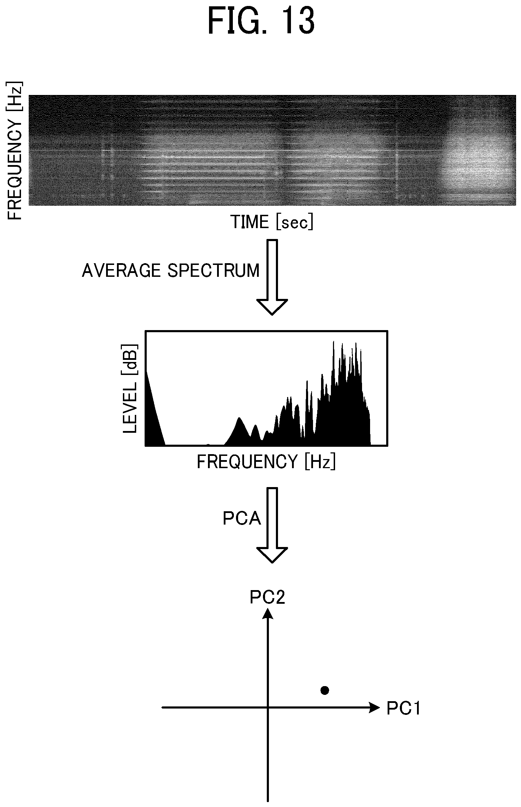

Examples of the index include a frequency component with respect to an average spectrum obtained by FFT or the like. FIG. 12 is a diagram illustrating a calculation example of a frequency component with respect to an average spectrum. As illustrated in FIG. 12, a specific bandwidth is extracted by a band pass filter with respect to an average spectrum obtained by FFT or the like, and the dimension is compressed. FIG. 13 is a diagram illustrating another calculation example of the frequency component with respect to the average spectrum. In FIG. 13, PC1 represents a first principal component axis, PC2 represents a second principal component axis. As illustrated in FIG. 13, the dimension of the average spectrum obtained by FFT or the like is compressed by filter bank processing, principal component analysis (PCA), or the like. In the filter bank processing, a plurality of band pass filters of different bandwidths is arranged to obtain the average power of each band.

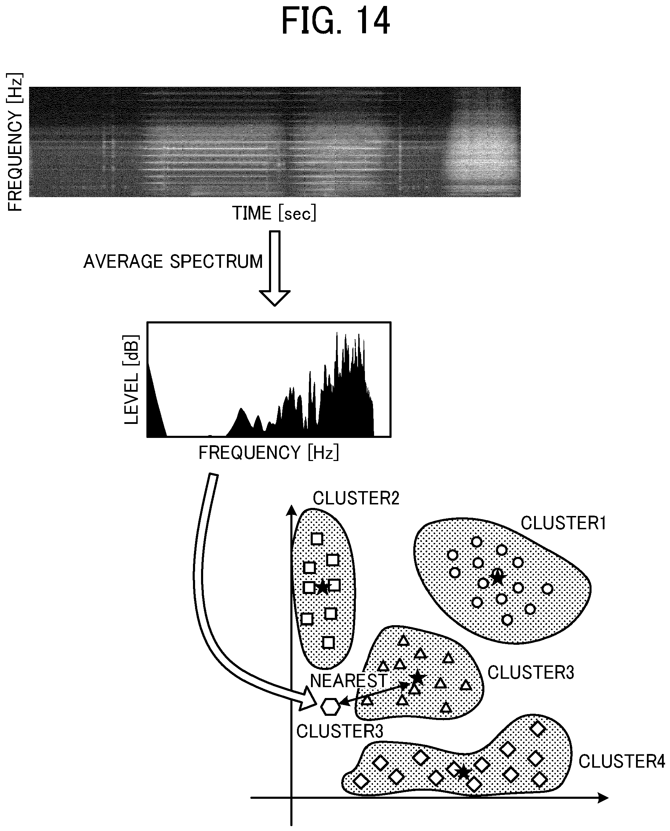

Examples of the index include a cluster number with respect to an average spectrum obtained by FFT or the like. FIG. 14 is a diagram illustrating a calculation example of the cluster number with respect to the average spectrum. In FIG. 14, there are clusters 1 to clusters 4. As illustrated in FIG. 14, a cluster number is calculated from the average spectrum obtained by FFT or the like, by applying a clustering device by an artificial intelligence (AI)-like method prepared separately.

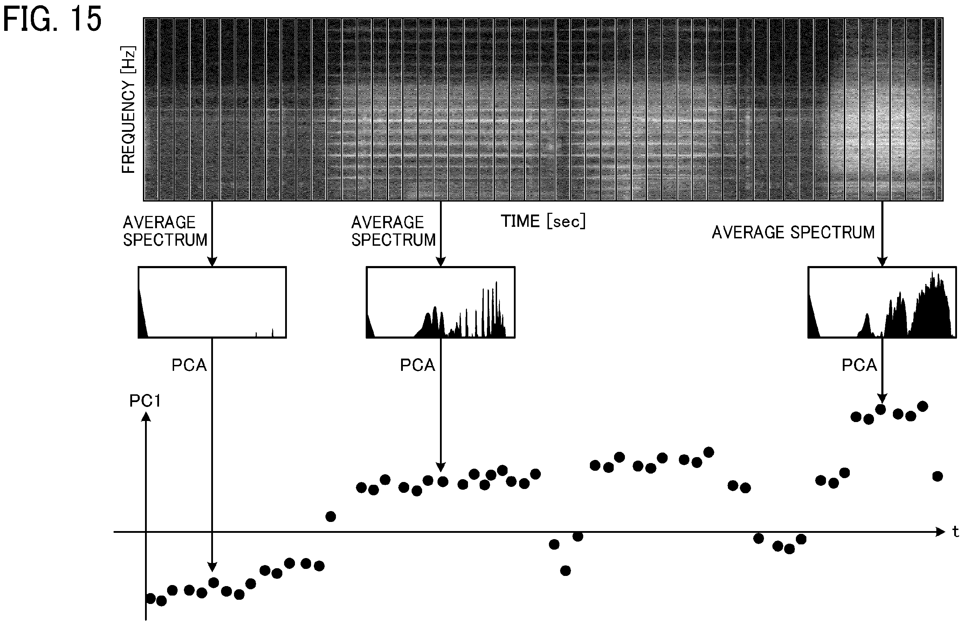

FIG. 15 is a diagram illustrating an example in which the average spectrum is represented in time series. As illustrated in FIG. 15, the cutting feed section may be time-divided into intervals of several hundred milliseconds to several seconds and represented as a time series of the above index obtained for each divided interval. Further, the feature value may be defined as a combination of a plurality of indexes.

(6) Next, when determining that the machining program indicating the process of the machining unit 210 of the machine 200 reaches the end (when the program start signal is again received after the machining program returns to the head, or when the operator explicitly instructs the end of the program), the operation time-series generation unit 109 stores the generated table in the operation time-series information storage unit 103.

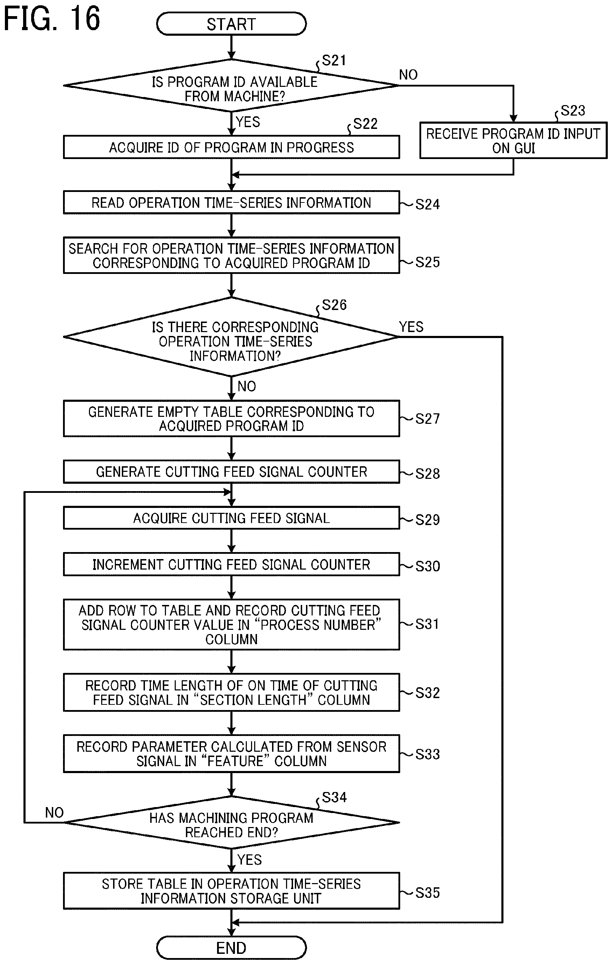

FIG. 16 is a flowchart illustrating a procedure for generating the operation time-series information performed by the operation time-series generation unit 109. As illustrated in FIG. 16, first, the operation time-series generation unit 109 determines whether a program ID is available from the machine 200 (step S21).

When it is determined that the program ID is available from the machine 200 (Yes in step S21), the operation time-series generation unit 109 acquires the program ID of the program being executed from the operation information acquisition unit 101 (step S22) and proceeds to step S24.

On the other hand, when it is determined that the program ID is not available from the machine 200 (No in step S21), the operation time-series generation unit 109 receives the input of the program ID on the GUI screen by the user (step S23) and proceeds to step S24.

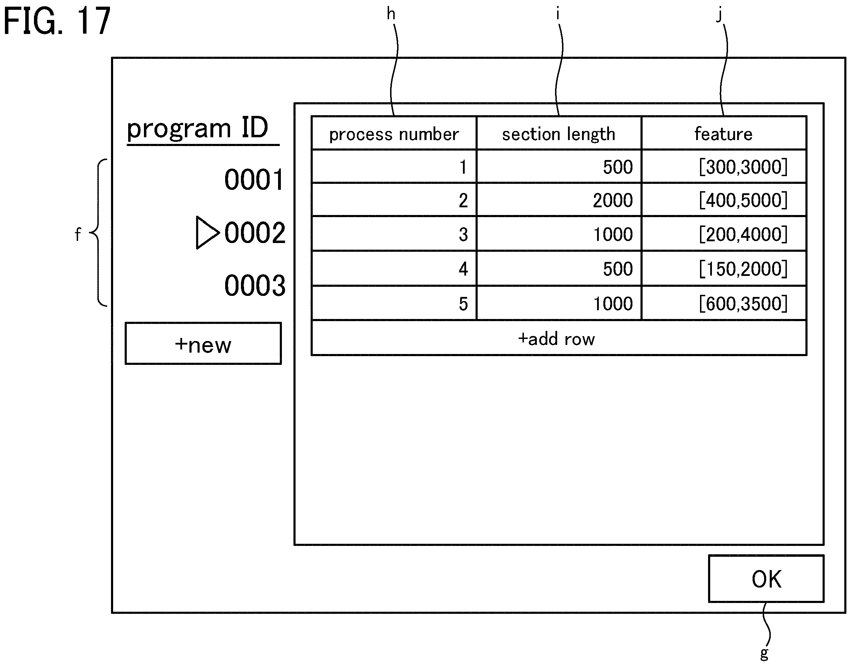

FIG. 17 is a diagram illustrating an example of the GUI screen. FIG. 17 illustrates an example of the GUI screen that receives input of various setting information from the user in order to create "Table 5" described below. On the GUI screen illustrated in FIG. 17, the program ID of a desired program is selectable from a program group f representing a plurality of programs registered in advance. Further, the GUI illustrated in FIG. 17 receives registration of the program ID of a new program. The GUI illustrated in FIG. 17 allows the user to select the program ID of a desired program from the program group f, operates an "OK" button g, to determine the program ID.

Next, the operation time-series generation unit 109 reads operation time-series information from the operation time-series information storage unit 103 (step S24). The operation time-series generation unit 109 searches for operation time-series information corresponding to the acquired program ID (step S25).

The operation time-series generation unit 109 determines whether there is operation time-series information corresponding to the acquired program ID (step S26).

When determining that the operation time-series information corresponding to the acquired program IDs is present (Yes in step S26), the operation time-series generation unit 109 ends the process.

On the other hand, when determining that the operation time-series information corresponding to the acquired program ID does not exist (No in step S26), the operation time-series generation unit 109 generates an empty table corresponding to the acquired program ID (step S27).

The GUI screen illustrated in FIG. 17 displays the operation time-series information corresponding to the program ID selected in step S23. The GUI screen illustrated in FIG. 17 presents a process number h indicating the order of processes executed by the machine 200, a length i of the machining section in the process, and a feature value j which is a combination of "average power" and "spectral centroid" for the entire machining section, as operation time-series information.

The GUI screen illustrated in FIG. 17 enables the user to edit the operation time-series information. When the operation time-series generation unit 109 determines that the operation time-series information corresponding to the acquired program ID does not exist, the GUI illustrated in FIG. 17 is presented in an empty state.

Next, the operation time-series generation unit 109 generates a cutting feed signal counter that counts the number of the cutting feed signals from the program start time point (step S28).

Next, the operation time-series generation unit 109 acquires the cutting feed signal from the operation information acquisition unit 101 (step S29). Then, the operation time-series generation unit 109 increments the cutting feed signal counter value (step S30).

Next, the operation time-series generation unit 109 adds a row to the table and records the cutting feed signal counter value in a "process number" column h of the table (step S31). In addition, the operation time-series generation unit 109 records the time length of the period in which the cutting feed signal is ON (cutting feed section length) in a "section length" column i of the table (step S32). Further, the operation time-series generation unit 109 records a parameter representing the feature of the signal pattern of the entire cutting feed section, which is calculated from the sensor signal, in a "feature" column j of the table (step S33).

Next, the operation time-series generation unit 109 determines whether the program has reached the end (step S34).

When determining that the program has reached the end (Yes in step S34), the operation time-series generation unit 109 stores the table in the operation time-series information storage unit 103 as operation time-series information (step S35) and ends the process.

On the other hand, when determining that the program has not yet reached the end (No in step S34), the operation time-series generation unit 109 returns to step S29 and acquires the cutting feed signal from the operation information acquisition unit 101.

As the result of the above operation, the operation time-series generation unit 109 generates, for example, the table such as Table 5 for each program ID and records the table in the operation time-series information storage unit 103. Table 5 presents an example in which the feature value is defined by a combination of "average power" and "spectral centroid" with respect to the entire cutting feed section.

**Table 5**

| Machining program ID: 1 | | |
|---|---|---|
| Process number | Cutting feed section length (ms) | Feature value (Average power, Spectral centroid [Hz]) |
| 1 | 500 | 300 |
| 2 | 2000 | 400 |
| 3 | 1000 | 200 |
| 4 | 500 | 150 |
| 5 | 1000 | 600 |

As described above, the diagnostic apparatus 100 according to the present embodiment includes the operation time-series generation unit 109 that generates operation time-series information from operation information, and the operation time-series information storage unit 103 stores the operation time-series information generated by the operation time-series generation unit 109. This configuration enables generation of the operation time-series information from actual data instead of manual generation of the operation time-series information.

In the above-described embodiments, the detection result is, for example, vibration data or acoustic data. However, other data such as a current value, a load, and a torque of the motor may be used as the detection result.

The program executed in the diagnostic system according to the embodiments described above or modifications may be provided by being installed in a ROM or the like in advance.

Alternatively, the program executed by the diagnostic system according to the embodiments described above or modifications may be provided as a computer program product stored in a computer-readable recording medium, such as a compact disc read only memory (CD-ROM), a flexible disk (FD), a compact disc recordable (CD-R), and a digital versatile disk (DVD) in a file format installable or executable.

Further, the program executed by the diagnostic system according to the embodiments described above or modifications may be installed on a computer connected to a network such as the Internet, to be downloaded via the network. Further, the program executed by the diagnostic system according to the embodiments described above or modifications may be provided or distributed via a network such as the Internet.

The program executed by the diagnostic system according to the embodiments described above or modifications is in a modular configuration including the above-described functional units. As hardware, as the CPU (a processor) reads the program from the ROM and executes the program, the above-described functional units are loaded and implemented (generated) in a main memory.

Aspects of the present disclosure are, for example, as follows.

### Aspect 1

A diagnostic apparatus includes a process number determination unit to determine a process number based on operation information that changes in accordance with an operation of a machine being a subject of diagnosis, the process number indicating an order of a particular process in a plurality of processes executed by the machine; and
a state determination unit to determine a state of the machine using corresponding one of a plurality of model parameters corresponding to the determined process number and state information that changes in accordance with the state of the machine.

### Aspect 2

The diagnostic apparatus according to aspect 1 further includes an operation information acquisition unit to acquire the operation information; and
an operation time-series information storage unit to store operation time-series information relating to the operation information. The process number determination unit determines the process number from the operation information acquired by the operation information acquisition unit and the operation time-series information stored in the operation time-series information storage unit.

### Aspect 3

The diagnostic apparatus according to aspect 1 or 2 further includes:
a model setting storage unit to store, for each process number, a correspondence between the process number and a model number identifying particular one of the plurality of model parameters and output the model number corresponding to the process number determined by the process number determination unit;
a model parameter storage unit to store, for each model parameter, a correspondence between the model parameter and the model number and output the model parameter corresponding to the model number read from the model setting storage unit; and
a state information acquisition unit to acquire state information that changes in accordance with a state of the machine.

The machine state determination unit determines the state of the machine using the model parameter read from the model parameter storage unit and the state information acquired by the state information acquisition unit.

### Aspect 4

The diagnostic apparatus according to aspect 2 further includes an operation time-series generation unit to generate the operation time-series information from the operation information, and the operation time-series information storage unit stores the operation time-series information generated by the operation time-series generation unit.

### Aspect 5

The diagnostic apparatus according to aspect 2 further includes an operation feature value history storage unit to store an operation feature value converted from the operation information. The process number determination unit stores, in the operation feature value history storage unit, the operation feature value converted from current operation information in the operation feature value history storage unit when the process number is not determined from the operation information and the operation time-series information. The process number determination unit determines the process number from subsequent operation information, the operation time-series information stored in the operation time-series information storage unit, and the operation feature value history stored in the operation feature value history storage unit.

### Aspect 6

In the diagnostic apparatus according to any one of aspects 1 to 5, the operation information includes data indicating a section during which the machine performs a predetermined operation.

### Aspect 7

In the diagnostic apparatus according to any one of aspects 1 to 5, the operation information includes data indicating a time at which the machine starts a repetitive operation.

### Aspect 8

In the diagnostic apparatus according to any one of aspects 1 to 5, the operation information includes a signal representing a vibration of the machine acquired with a sensor.

### Aspect 9

In the diagnostic apparatus according to any one of aspects 1 to 5, the operation information includes a signal representing a sound generated by the machine acquired with a sensor.

### Aspect 10

A program to control a computer to function as:
a process number determination unit to determine a process number based on operation information that changes in accordance with an operation of a machine being a subject of diagnosis, the process number indicating an order of a particular process in a plurality of processes executed by the machine; and
a state determination unit to determine a state of the machine using corresponding one of a plurality of model parameters corresponding to the determined process number and state information that changes in accordance with the state of the machine.

### Aspect 11

A diagnostic method executed by a diagnostic apparatus includes:
determining a process number based on operation information that changes in accordance with an operation of a machine being a subject of diagnosis, the process number indicating an order of a particular process in a plurality of processes executed by the machine; and
determining a state of the machine using corresponding one of a plurality of model parameters corresponding to the determined process number and state information that changes in accordance with the state of the machine.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A diagnostic apparatus (100) comprising:
a process number determination unit (104) configured to determine a process number based on operation information that changes in accordance with an operation of a machine being a subject of diagnosis, the process number indicating an order of a particular process in a plurality of processes executed by the machine; and
a state determination unit (107) configured to determine a state of the machine using corresponding one of a plurality of model parameters corresponding to the determined process number and state information that changes in accordance with the state of the machine.

2. The diagnostic apparatus (100) according to claim 1, further comprising:
an operation information acquisition unit (101) configured to acquire the operation information; and
an operation time-series information storage unit (103) configured to store operation time-series information relating to the operation information,
wherein the process number determination unit (104) determines the process number from the acquired operation information and the stored operation time-series information.

3. The diagnostic apparatus (100) according to claim 1 or 2, further comprising:
a model setting storage unit (105) configured to store, for each process number, a correspondence between the process number and a model number identifying particular one of the plurality of model parameters;
a model parameter storage unit (106) configured to store, for each model parameter, a correspondence between the model parameter and the model number; and
a state information acquisition unit (102) configured to acquire state information that changes in accordance with a state of the machine,
wherein the state determination unit (107):
reads, from the model setting storage unit (105), the model number corresponding to the process number determined by the process number determination unit (104);
reads, from the model parameter storage unit (106), the model parameter corresponding to the model number read from the model setting storage unit (105); and
determines the state of the machine using the model parameter read from the model parameter storage unit (106) and the state information acquired by the state information acquisition unit (102).

4. The diagnostic apparatus (100) according to claim 2, further comprising an operation time-series generation unit (109) configured to generate the operation time-series information from the operation information,
wherein the operation time-series information storage unit (103) stores the operation time-series information generated by the operation time-series generation unit (109).

5. The diagnostic apparatus (100) according to claim 2, further comprising an operation feature value history storage unit (108) configured to store an operation feature value converted from the operation information,
wherein the process number determination unit (104):
stores, in the operation feature value history storage unit (108), the operation feature value converted from current operation information in the operation feature value history storage unit (108) when the process number is not determined from the operation information and the operation time-series information; and
determines the process number from subsequent operation information, the operation time-series information stored in the operation time-series information storage unit (103), and the operation feature value history stored in the operation feature value history storage unit (108).

6. The diagnostic apparatus (100) according to any one of claims 1 to 5,
wherein the operation information includes data indicating a section during which the machine performs a predetermined operation.

7. The diagnostic apparatus (100) according to any one of claims 1 to 5,
wherein the operation information includes data indicating a time at which the machine starts a repetitive operation.

8. The diagnostic apparatus (100) according to any one of claims 1 to 5,
wherein the operation information includes a signal representing a vibration of the machine acquired with a sensor.

9. The diagnostic apparatus (100) according to any one of claims 1 to 5,
wherein the operation information includes a signal representing a sound generated by the machine acquired with a sensor.

10. A diagnostic method comprising:
determining (S7) a process number based on operation information that changes in accordance with an operation of a machine being a subject of diagnosis, the process number indicating an order of a particular process in a plurality of processes executed by the machine; and
determining a state of the machine using corresponding one of a plurality of model parameters corresponding to the determined process number and state information that changes in accordance with the state of the machine.

11. A carrier medium carrying computer readable codes for controlling a computer system to carry out the method according to claim 10.
